# EUROPEAN PATENT SPECIFICATION

(11) **EP 2 356 162 B1**
(45) Date of publication and mention of the grant of the patent: **14.02.2018**
(21) Application number: 09768476.5
(22) Date of filing: 10.12.2009
(51) Int. Cl.: C08F 290/06, C08L 67/07, C08L 67/06, C08K 5/00, H02K 15/12, H02K 3/30

(54) **IMPREGNATING COMPOSITIONS**
IMPRÄGNIERZUSAMMENSETZUNGEN
COMPOSITIONS D'IMPRÉGNATION

(30) Priority: 10.12.2008 US 201377 P
(43) Date of publication of application: 17.08.2011
(73) Proprietor: Coatings Foreign IP Co. LLC, Wilmington, DE 19801 (US)
(72) Inventor: BOEHM, Frank-Rainer, 51519 Odenthal (DE); HERM, Michael, 42553 Velbert (DE); GRUENE DE JONG, Ulrike, 42115 Wuppertal (DE); TRAPPMANN, Barbara, 40479 Düsseldorf (DE); RITTINGHAUS, Volker, 42279 Wuppertal (DE)
(74) Representative: LKGLOBAL Lorenz & Kopf PartG mbB Patentanwälte
(86) International application number: PCT/US2009/067516
(87) International publication number: WO 2010/068766

(56) References cited:
- GB-A- 1 396 893
- GB-A- 1 444 417
- US-A- 5 466 492
- US-A- 5 587 433

## Description

### Field of the Invention

The present invention refers to an impregnating composition for fixing wound items such as electrical windings in electrical equipment providing excellent electrical insulation properties even at temperatures much higher than 200°C and under humid conditions.

### Background of the Invention

The use of unsaturated polymers in compositions suitable for impregnating (e.g. by techniques of immersion, dipping, trickling or casting) wound items such as electrical coils and windings, especially windings of magnet wires in electrical devices as well as for casting of electrical devices such as stators, rotors and transformers, for mechanical toughening and fixing, is well known in the art, see, for example, U.S. 5,466,492. Various resins can be used for those applications, which typically provide electrical insulation, stabilization of the electrical winding against vibrations, improved aging behaviour and protection against chemical and mechanical impact. As downsizing of electrical devices is a more and more important topic for efficient motors, the improved electrical insulation of the entire electrical device becomes an important property in this direction, and the impregnation composition is the key component for that.

Insulation properties and thermal conductivity can be improved using inorganic fillers, like, for example, titanium dioxide, silica and aluminium. However, impregnation materials containing such fillers are typically not very homogeneous. This could cause problems regarding storage conditions of the composition and can additionally lead to failure of the penetration into the cavities of electrical windings as well as to failure of the impregnation during operation of the electrical device.

The insulation properties of standard impregnating resins can decrease fairly quickly when higher temperatures, for example, higher than 150°C, are applied. EP-A 302484 and EP-A 871677 disclose resins based on dicyclo pentadiene providing excellent thermal resistance, however their insulation properties at elevated temperatures are not significantly enhanced. Another way to approach this problem is the use of epoxy systems, but they are much more difficult to impregnate due to high viscosities, further, their storage stability is limited.

U.S. 4,857,434 refers to methacrylated polymeric hydrocarbon maleate prepolymers containing pendant maleate groups in formulations for the preparation of printing plates, for example, relief printing plates for letterpress or flexographic printing, having tack-free surface and good tensile strength.

There is a need to find impregnating compositions for fixing wound items such as electrical windings in electrical equipment providing excellent electrical insulation properties even at higher temperatures.

### Summary of the Invention

The invention provides a composition for fixing wound items comprising
A) 5 to 80 wt% of at least one polyolefin-containing unsaturated polyester resin,
B) 0 to 60 wt%, preferably 0.1 to 50 wt%, of at least one unsaturated polyester resin different from A),
C) 5 to 70 wt% of at least one reactive diluent,
D) 0.01 to 15 wt% of additives, and
E) 0.1 to 20 wt% of at least one free radical initiator,
the wt% being based on the total weight of the composition,
wherein the at least one polyolefin-containing unsaturated polyester resin A) is obtained by reaction of at least one functional polyolefin with at least one polybasic carboxylic acid, acid anhydride and/or ester therefrom, and polyhydric alcohols and further reaction of the resulted product with at least one carbon-carbon unsaturated functional compound.

The composition according to the invention provides excellent thermal transfer properties and a high level of electrical insulation properties under humid: conditions, with excellent adhesion and thermal stability, even at high temperatures during the operation of the electrical devices, much higher than 200°C.

### Detailed Description

The features and advantages of the present invention will be more readily understood, by those of ordinary skill in the art, from reading the following detailed description. It is to be appreciated those certain features of the invention, which are, for clarity, described above and below in the context of separate embodiments, may also be provided in combination in a single embodiment. Conversely, various features of the invention that are, for brevity, described in the context of a single embodiment, may also be provided separately or in any sub-combination. In addition, references in the singular may also include the plural (for example, "a" and "an" may refer to one, or one or more) unless the context specifically states otherwise,

The slight variations above and below the stated ranges of numerical values can be used to achieve substantially the same results as values within the ranges. Also, the disclosure of these ranges is intended as a continuous range including every value between the minimum and maximum values.

All the number or weight average molar mass data stated in the present description are determined or to be determined by gel permeation chromatography (GPC; divinylbenzene-cross-linked polystyrene as the immobile phase, tetrahydrofuran as the liquid phase, polystyrene standards, according to DIN 55672),

The term (meth) acryl refers to acryl and/or methacryl in this document.

The composition according to the invention provides excellent electrical insulation properties even at temperatures during the operation of the electrical devices, much higher than 200°C, for example, at
temperatures of 220 to 280°C, for example, with a tan(delta) of 0.05 at a temperature >250°C. The tan(delta) describes the dielectric loss, according to IEC 600455-3-5 / IEC 60250.

The composition according to the invention comprises the at least one polyolefin-containing unsaturated polyester resin of component A) in a range of 5 to 80 wt%, preferably 15 to 75 wt%, particularly preferred are 35 to 70 wt%, the wt% being based on the total weight of the composition. The resin of component A) may have a number average molecular weight in a range of, for example, 1000 to 5000 g/mol. The resin of component A) may contain or may not contain functional groups, for example, OH, maleic and/or (meth) acrylic groups.

The component A) is obtained by reaction of at least one functional polyolefin with at least one polybasic carboxylic acid, acid anhydride and/or ester therefrom, and polyhydric alcohols and further reaction of the resulted product with at least one carbon-carbon unsaturated functional compound. The ratio of the reaction components are chosen in a way, known by a person skilled in the art. The polyolefin may have functional groups such as, for example, carboxyl groups, hydroxy groups, epoxy groups.

The functional polyolefin may have a number average molecular weight in a range of, for example, 250 to 10000 g/mol, preferably 500 to 3500 g/mol. Examples of such functional polyolefine are functional polyisoprene, polychloroprene, hydroxy functional polybutadiene, carboxy functional polybutadiene, epoxidized polybutadiene, and copolymers of above polymers or with olefinic monomers such as ethylene, propylene, 1-hexene, 1-octene, styrene, vinyl chloride, etc.. Preferably, hydroxy functional polyisoprene and hydroxy functional polybutadiene are used.

Examples of polybasic carboxylic acids, acid anhydrides and/or esters therefrom are saturated and/or unsaturated aliphatic, cycloaliphatic and/or aromatic mono-, di-, tri- and/or tetracarboxylic acids, anhydrides and/or esters, also alkyl esters having 1 to 4 carbon atoms in the alkyl chain, known by a person skilled in the art Examples are maleic acid, maleic anhydride, citraconic anhydride, itaconic acid, adipic acid, phthalic acid, aconitic anhydride, dicyclopentadiene dimaleinate, tetrahydrophthalic acid anhydride, *endo*-methylene tetrahydrophthalic anhydride, trimellitic anhydride, terephthalic acid, isophthalic acid, tetrachlorophthalic acid, hexachlorophthalic acid, adipic acid, glutaric acid, sebacinic acid, oligo- and/or polymeric fatty acids. Preferred are maleic anhydride, dicyclopentadiene dimaleinate, tetrahydrophthalic acid anhydride and trimellitic anhydride,

Polyhydric alcohols which may be used are diols, triols and further polyols as known by a person skilled in the art, for example, diols such as ethylene glycol, neopentyl glycol, propylene glycol, 1,3-propane diol, triols and polyols such as trimethylol ethane, trimethylol propane, triethanolamin, monoethanolamine for imide containing products, pentaerythritol, dipentaerythritol, trisethyl isocyanurate, glycerol, furthermore, polyethylene glycol, polypropylene glycol, polytetrahydro furane, glycerol. Preferred are 1,3-propane diol, trimethylol propane, pentaerythritol, neopentyl glycol, triethanolamine, monoethanolamine and glycerol.

(Meth)acryl functional compounds may be used as the at least one carbon-carbon unsaturated functional compound and can be, for example, polyester (meth)acrylates, polyether (meth)acrylates, (meth)acrylated poly(butadiene, urethane (meth)acrylates, epoxy (meth)acrylates amine (meth)acrylates, silicone (meth)acrylates, for example, butyl(meth)acrylate, glycidyl (meth)acrylate, trimethylolpropane tri(meth)acrylate, (meth)acrylic acid chloride. Preferred are glycidyl methacrylate and (meth) acrylic acid chloride.

The polyolefin-containing unsaturated polyester resin of component A) may be prepared by methods well known by a person skilled in the art, for example, by stepwise heating the components, e.g., to temperatures of 100 - 220°C, in a melt process under inert gas or in an azeotropic process, possibly in the presence of polyesterification catalysts.

The ratios of the amounts of the components are chosen in such a way, known at a person skilled in the art, that the weight average molar mass of the resulting polyester resin A) is in the range of 600 to 10000 g/mol, preferably 1100 to 4500 g/mol.

As component B) of the composition according to the invention at least one unsaturated polyester resin and/ or unsaturated polyester imide resin different from A) can be used in a range of 0 to 60 wt%, preferably 0.1 to 50 wt%, particularly preferred are 1 to 40 wt%, the wt% being based on the total weight of the composition. The at least one unsaturated polyester resin and/ or unsaturated polyester imide resin different from A) may have a number average molecular weight in a range of, for example, 500 to 5000 g/mol Examples are condensation products prepared from polybasic carboxylic acids, acid anhydrides and/or esters therefrom, polyhydric alcohols and, if they contain imide, compounds with amino groups. Polybasic carboxylic acids and polyhydric alcohols can be used, in general, as mentioned above, to produce the unsaturated polyester resin of component B) different from unsaturated polyester of component A). Preferred examples of polybasic carboxylic acids, acid anhydrides and/or esters therefrom are maleic anhydride, dicyclopentadiene dimaleinate, tetrahydrophthalic acid anhydride and trimellitic anhydride. Preferred examples of polyhydric alcohols are 1,3-propane diol, trimethylolpropane, pentaerythritol, neopentyl glycol, triethanolamine, monoethanolamine and glycerol,

The composition according to the invention comprises at least one reactive diluent of component C) in a range of 5 to 70 wt%, preferably 10 to 65 wt%, particularly preferred are 25 to 55 wt%, the wt% being based on the total weight of the composition. Usable reactive diluents are compounds having ethylenically unsaturated structures with one or more vinylic or allylic double bonds, which are radically polymerizable. Examples are styrene, vinyl toluene, p-methyl styrene, tert-butyl styrene, divinyl benzene, N-vinyl pyrrolidone, hydroxybutyl vinyl ether, butane diol vinyl ether, triethylene glycol divinyl ether, phthalic acid diallyl ester, fumaric acid diallyl ester, triallyl phosphate, triallyl isocyanurate, diallyl benzene, diallyl bisphenol A, pentaerythritol tri or tetra allyl ether. Component C) may be also acrylic or methacrylic acid esters like hydroxyethyl (meth)acrylate, hydroxypropyl (meth)acrylate, phenoxyethyl (meth)acrylate, dicyclopentadiene (meth)acrylate, butane diol di(meth)acrylate, hexane diol di(meth)acrylate, dipropylene glycol di(meth)acrylate, trimethylol propane di- and tri(meth)acrylate, pentaerythritol di- and tri(meth)acrylate, epoxy resin (meth)acrylates, (meth)acrylates of reaction products of a polyaddition of ethylene or propylene oxide with polyols such as trimethylol propane or pentaerythritol, and (meth)acrylates of oligo(ethylene glycol) or oligo(propylene glycol). Preferred examples for (C) are styrene, vinyl toluene, hexane diol dimethacrylate, butane diol dimethacrylate and (meth)acrylates of reaction products of a polyaddition of ethylene oxide with trimethylol propane or mixtures thereof. Up to 50 wt% of the component (C) can consist of monomers with polymerizable groups like maleic or fumaric bis-alkyl esters, in which the alkyl groups contain 1 to 4 carbon atoms, or like mono- or bis-maleic imides (See also DE-A-2040094, DE-A-2719903, DE-A-3247058 and EP-A-0255802.)

The composition according to the invention may further comprise at least one reactive substance F) that is, upon curing of the composition, able to chemically bind to the organic components A), B) and/or C) to form inorganic/organic structures and/or can be an inorganic polymeric substance carrying reactive groups which, upon curing of composition, are able to chemically bind to the organic components A) to C).

Examples for the reactive substance F) able to chemically bind to the organic components A), B) and/or C) are compounds of at least one metal, metalloid and/or non-metal, for example, aluminium, phosphorus, sulphur, boron, magnesium, silicon, selenium, germanium, zinc, yttrium, cerium, vanadium, hafnium, gallium, lead, nickel, tantalum, titanium, zirconium, chromium, manganese, tin or bismuth. The metals, metalloids or non-metals are chemically bound to at least one carbon, oxygen, nitrogen, sulphur and/or halogen atoms which are parts of chemical moieties such as -OH, -OR (in which R is an aliphatic, cycloaliphatic, unsaturated or aromatic organic group), -OC(O)R (in which R is an aliphatic, cycloaliphatic, unsaturated or aromatic organic group), -NH₂, NHR (in which R is an aliphatic, cycloaliphatic, unsaturated or aromatic organic group), -NRR' (in which R and R' are aliphatic, cycloaliphatic, unsaturated or aromatic organic groups and can be the same), - N[C(O)R]R' (in which R and R' are aliphatic, cycloaliphatic, unsaturated or aromatic organic groups and can be the same), -N[C(O)R][C(O)R'] (in which R and R' are aliphatic, cycloaliphatic, unsaturated or aromatic organic groups and can be the same), -SH, -SR (in which R is an aliphatic, cycloaliphatic, unsaturated or aromatic organic group), -SC(O)R (in which R is an aliphatic: cycloaliphatic, unsaturated or aromatic organic group). Oxygen atoms may be replaced or partially replaced by sulphur atoms. Preferred are compounds of at least one silicon, titanium and/or zirconium atoms which are bound to at least one hydroxyl group, alkoxy group and/or organic moieties carrying unsaturated groups.

Examples for the inorganic polymeric substance F) able to chemically bind to the organic components A), B) and/or C) are inorganic linear or branched polymers or oligomers, e.g., at least one oxide of metals, metalloids or non-metals like aluminium, phosphorus, sulphur, boron, magnesium, silicon, selenium, germanium, zinc, yttrium, cerium, vanadium, hafnium, gallium, lead, nickel, tantalum, titanium, zirconium, chromium, manganese, tin, or bismuth. The metals, metalloids or non-metals are chemically bound to carbon, oxygen, nitrogen, sulphur and/or halogen atoms under forming polymers; these polymers are selected from, for example, silicones, poly(alkoxy)silicates, poly(hydroxy)silicates, poly(alkoxy)titanates, poly(hydroxy)titanates: poly(oxo)metallates, poly(alkoxy)titanates, poly(hydroxy)titanates, poly(alkoxy)zirconates, poly(hydroxy)zirconates, poly(hydroxy)tin, poly(alkoxy)tin compounds. The polymers can be highly crosslinked and can be used as colloidal solution like colloidal titanium dioxide, colloidal zirconium dioxide, colloidal tin oxide or colloidal silica solutions.

Preferred components of the reactive substance F) and/or the inorganic substance able to chemically bind to the organic components A), B) and/or C) are polymers or colloidal solutions based of silicon, titanium or zirconium and oxygen atoms, which contain hydroxyl and/or alkoxy groups and/or hydroxyalkyloxy groups and/or organic moieties that carry epoxy and/or isocyanate and/or unsaturated groups, which may also be of polymeric nature, e.g., poly(epoxyacrylates) or unsaturated polyesters, in a range of 0 to 50 wt%, preferably 0.1 to 30 wt%, the wt% being based on the total weight of the composition A) to F).

The component (D) of the invention comprises additives known at a person skilled in the art in a range of 0.01 to 15 wt%, preferably 0.1 to 15 wt%, particularly preferred are 0.1 to 10 wt%, the wt% being based on the total weight of the composition. These are extenders, plasticising components, accelerators, for example metal salts, substituted amines; stabilisers and inhibitors, for example, hydroquinones, quinones, quinone-type inhibitors, phenol-type inhibitors, organic salts of metals and/or sterically hindered aliphatic or aromatic amines; alkylphenols, alkylphenol ethers, defoamers and flow control agents. Further additives may be used such as fiber-like reinforcement agents like carbon, glass, polyamide, polyester, polyacrylnitrile, polyaramide, polyamideimide or polycarbonate fibers or fillers like chalk, talc, aluminium hydroxide, quartz flour, slate flour, clay or microdolomite; organic and inorganic pigments, dyes, thixotropy agents and shrinkage reducing agents. The amount of such additives in the composition is depending on the respective application, and is known by a person skilled in the art.

The composition according to the invention comprises the at least one free radical initiator of component E) in a range of 0.1 to 20 wt%, preferably 0,1 to 10 wt%, particularly preferred are 0.1 to 5 wt%, the wt% being based on the total weight of the composition. Free radical initiators are those which may be activated by high-energy radiation and heat and which are known by a person skilled in the art. Examples of radical initiators activated by high-energy radiation such as UV radiation (photoinitiators) are chlorine containing photoinitiators, aromatic ketones, hydroxyalkyl phenones, phosphine oxides, acylphospine oxides. Examples of heat-responsive initiators (thermally labile initiators) are C-C-labile compounds such as 1,2-substituted tetraphenyl ethanes having, for example, the formula YPh₂C-CPh₂Y with Ph: phenyl, Y: -OH, -OCH₃,-OC₆H₅, -CH₃, -CN, -NH₂, -Cl or -OSi(CH₃)₃ and azo compounds such as azobisisobutyronitrile, Furthermore, initiators such as peroxides, hydroperoxides, ketone peroxides can also be used, for example, ditertiary-butyl peroxide, dibenzoyl peroxide, peroxy dicarbonates, peroxy diesters, cumene peroxide, methyl ethyl ketone peroxide.
Preferred is the use of a mixture of photoinitiators and thermally labile initiators or of thermally labile initiators alone, for example, 1,1-di(tert-butylperoxy)-3,3,5-trimethylcydohexane, tert-butyl cumyl peroxide, benzpinacol derivatives and 1-hydroxy-cyclohexyl phenyl ketone.

The components A) to E) or A) to F) may be mixed as readily prepared materials in any sequence. The components A) and/or B) may also be dissolved in (C) and afterwards mixed together with, for example, D) and E) and F) or with a solution of D) and/or E) in C).

The composition according to this invention can be used in several fields of applications. The composition is especially useful for fixing of substrates such as wound items, e.g. coiled substrates, especially of electrical windings like magnet wires in electrical devices like rotors, stators or transformers, or of coiled metal foils in the electrical sector, or coiled substrates on the basis of glass fibers, plastic fibers or plastic foils, and it may also be used for the impregnation of fabrics.

The application of the composition according to the invention may be proceed by processes known in the art, for example, by impregnation, for example, dip impregnation, vacuum impregnation and/or trickle impregnation, and curing the applied composition.

In the dip impregnation process, the substrates are dipped into the composition for a certain time or pulled through the composition. The substrate may be heated to temperatures below the curing temperature of the composition of the invention before dipping. In the vacuum impregnation process, the substrates are placed into a closed container, vacuum is applied, then the composition of the invention can be flushed into the container. In the trickle impregnation process, the composition according to this invention can be trickled with e.g. a nozzle onto the rotating substrate.

It can be useful to heat the substrate to temperatures below the curing temperature of the composition, for a good penetration. The heating may be provided by methods known in the art, for example, by electrical current or in an oven, for example, during or before impregnation application.

After the impregnation application the composition according to this invention can be cured, This can be proceeded by radical polymerization. The curing may be carried out by heating the impregnated substrate and/or by irradiation the impregnated substrate with high-energy radiation.

The heat for curing can be produced, for example, by passing an electrical current through the windings; it is also possible to use an oven or an infrared (IR) or a near infrared radiation (NIR) source, The heating temperature (object temperature) may be in the range of 80 to 180°C, Typical curing times are, for example, 1 minute to 180 minutes, in case of NIR radiation the curing time may be shorter, for example, below 1 minute. The composition according to this invention can also be cured at low temperatures, under the use of additives such as aromatic amines or salts of cobalt, copper, cerium or vanadium.

The coating according to this invention can also be cured by the application of high-energy radiation, e.g. ultraviolet (UV) light or electron beam. For UV curing, adequate initiators can be used, for example, photoinitiators that absorb in a wavelength range of 190 to 450 nm.

Also the combination of photoinitiators with thermally labile initiators is possible, e.g. for a combination of heat curing and UV curing.

The high-energy radiation may be used for acceleration of the curing process, but also for through-curing of the applied composition, depending on the impregnation layer thickness. UV and electron beam radiation can also be used to cure only the surface of the impregnation composition of the invention applied on the substrate, in order to reduce emission of volatile monomers of the composition in a thermal curing step afterwards.

The invention will be described with reference to the following examples;

### Examples

### Example 1

### Preparation of Component A)

100g of hydroxyfunctional polybutadiene (Mn = 2400 g/mol, functionality = 1.9) is reacted with 7.7g maleic anhydride at 130 - 140°C. The resulting product is cooled down to 60°C and dissolved in THF (200g) Then, 7.25g of epichlorohydrin, 8g of triethylamine and 0.1g of a catalyst are added. After reaction, 6.75 g of methacrylic acid are added. After reaction, the solution is cooled down and the precipitate is filtered off. The THF and residual triethylamine are distilled off at 60°C under first slight, then strong vacuum. The residue is diluted with 1,4-butane diol dimethacrylate (59g) and cooled down.

### Preparation of Impregnating Resin Compositions

### 1.1 Composition of Prior Art

As composition of prior art, Voltatex® 4200 (DuPont) is used which is a standard impregnating resin based on an unsaturated polyester, 1,4-butane diol dimethacrylate and customary additives as well as a thermal radical initiator.

### 1.2 Composition of the Invention

100g of component A) are mixed with 1.5g of customary additives and a thermal radical initiator, and with 5g of 1,4-butane diol dimethacrylate.

### Example 2

### Curing Process and Results

The materials resulted from Examples 1.1 and 1.2 are cured at 150°C for one hour in appropriate molds for the following tests:

**Table 1: Test Results**

| **Example** | **tangent (delta) IEC 600455-3-5 /IEC 60250** | **Shore-D hardness (20g block) DIN 53505** | **Breakdown Voltage IEC 600466-3-5 /IEC 60455-2** | **Breakdown Voltage after 96h at 92% humidity IEC 600455-3-5/IEC 60455-2** |
|---|---|---|---|---|
| **1.1** | 0.2 at 123°C | 77 | 85 kV/mm at room temperature | 66 kV/mm at room temperature |
| | | | 82 kV/mm at 155°C | |
| **1.2** | 0,0 5 at 270°C | 50 | 99 kV/mm at room temperature | 96 kV/mm at room temperature |
| | | | 88 kV/mm at 155°C | |

The hardness test shows a hard and brittle coating for the composition of prior art and a flexible coating according to the invention. The breakdown voltage data illustrate excellent insulation properties, particularly under humid conditions, of the coating according to the invention.

## Claims

1. A composition for fixing wound items comprising
A) 5 to 80 wt% of at least one polyolefin-containing unsaturated polyester resin,
B) 0 to 60 wt% of at least one unsaturated polyester resin different from A),
C) 5 to 70 wt% of at least one reactive diluent,
D) 0.01 to 15 wt% of additives, and
E) 0.1 to 20 wt% of at least one free radical initiator,
the wt% being based on the total weight of the composition,
wherein the at least one polyolefin-containing unsaturated polyester resin A) is obtained by reaction of at least one functional polyolefin with at least one polybasic carboxylic acid, acid anhydride and/or ester therefrom, and polyhydric alcohols and further reaction of the resulted product with at least one carbon-carbon unsaturated functional compound.

2. The composition of claim 1 comprising
A) 15 to 75 wt% of at least one polyolefin-containing unsaturated polyester resin,
B) 0.1 to 50 wt% of at least one unsaturated polyester resin different from A),
C) 10 to 65 wt% of at least one reactive diluent,
D) 0.1 to 15 wt% of additives, and
E) 0.1 to 10 wt% of at least one free radical initiator,
the wt% being based on the total weight of the composition.

3. The composition of claim 1 and 2 comprising 0 to 50 wt% of at least one reactive substance F) able to chemically bind to the organic components A), B) and/or C) to form inorganic/organic structures, the wt% being based on the total weight of the composition.

4. The composition of claim 1 and 2 comprising 0 to 50 wt% of at least one inorganic polymeric substance F) carrying reactive groups which are able to chemically bind to the organic components A) to C), the wt% being based on the total weight of the composition.

5. The composition of claims 1 to 4 wherein the at least one functional polyolefin is hydroxyl functional polyisoprene and/or hydroxyl functional polybutadien.

6. A process of fixing wound items comprising the steps
a) applying the composition of claims 1 to 5 onto wound items by impregnation, and
b) curing the applied composition.

7. A wound item fixed with the composition of claim 1 to 5.

## Patentansprüche

1. Zusammensetzung zum Fixieren gewickelter Gegenstände, umfassend:
A) 5 bis 80 Gew.-% mindestens eines polyolefinhaltigen ungesättigten Polyesterharzes,
B) 0 bis 60 Gew.-% mindestens eines ungesättigten Polyesterharzes, das sich von A) unterscheidet,
C) 5 bis 70 Gew.-% mindestens eines Reaktivverdünners,
D) 0,01 bis 15 Gew.-% Zusatzstoffe und
E) 0,1 bis 20 Gew.-% mindestens eines Radikalinitiators,
wobei die Gew.-% auf das Gesamtgewicht der Zusammensetzung bezogen sind,
wobei das mindestens eine polyolefinhaltige ungesättigte Polyesterharz A) durch Umsetzung von mindestens einem funktionellen Polyolefin mit mindestens einer/m polybasischen Carbonsäure, Säureanhydrid und/oder Ester davon und polyhydrischen Alkoholen und weitere Umsetzung des resultierenden Produkts mit mindestens einer Kohlenstoff-Kohlenstoff ungesättigten funktionellen Verbindung erhalten wird.

2. Zusammensetzung nach Anspruch 1, umfassend:
A) 15 bis 75 Gew.-% mindestens eines polyolefinhaltigen ungesättigten Polyesterharzes,
B) 0,1 bis 50 Gew.-% mindestens eines ungesättigten Polyesterharzes, das sich von A) unterscheidet,
C) 10 bis 65 Gew.-% mindestens eines Reaktivverdünners,
D) 0,1 bis 15 Gew.-% Zusatzstoffe und
E) 0,1 bis 10 Gew.-% mindestens eines Radikalinitiators,
wobei die Gew.-% auf das Gesamtgewicht der Zusammensetzung bezogen sind.

3. Zusammensetzung nach Anspruch 1 und 2, umfassend 0 bis 50 Gew.-% mindestens einer reaktionsfähigen Substanz F), die in der Lage ist, chemisch an die organischen Komponenten A), B) und/oder C) zu binden, um anorganische/organische Strukturen auszubilden, wobei die Gew.-% auf das Gesamtgewicht der Zusammensetzung bezogen sind.

4. Zusammensetzung nach Anspruch 1 und 2, umfassend 0 bis 50 Gew.-% mindestens einer anorganischen polymeren Substanz F), die reaktionsfähige Gruppen trägt, die in der Lage sind, chemisch an die organischen Komponenten A) bis C) zu binden, wobei die Gew.-% auf das Gesamtgewicht der Zusammensetzung bezogen sind.

5. Zusammensetzung nach den Ansprüchen 1 bis 4, wobei das mindestens eine funktionelle Polyolefin hydroxyfunktionelles Polyisopren und/oder hydroxyfunktionelles Polybutadien ist.

6. Verfahren zum Fixieren gewickelter Gegenstände, das folgende Schritte umfasst:
a) Aufbringen der Zusammensetzung nach den Ansprüchen 1 bis 5 auf gewickelte Gegenstände durch Imprägnierung und
b) Härten der aufgebrachten Zusammensetzung.

7. Gewickelter Gegenstand, der mit der Zusammensetzung nach Anspruch 1 bis 5 fixiert ist.

## Revendications

1. Composition pour fixer des articles enroulés comprenant
A) 5 à 80 % en poids d'au moins une résine polyester insaturée contenant une polyoléfine,
B) 0 à 60 % en poids d'au moins une résine polyester insaturée différente de A),
C) 5 à 70 % en poids d'au moins un diluant réactif,
D) 0,01 à 15 % en poids d'additifs, et
E) 0,1 à 20 % en poids d'au moins un initiateur de radical libre,
le % en poids étant basé sur le poids total de la composition, où la au moins une résine polyester insaturée contenant une polyoléfine A) est obtenue par réaction d'au moins une polyoléfine fonctionnelle avec au moins un acide carboxylique polybasique, un anhydride acide et/ou un de ses esters, et des alcools polyhydriques et la réaction en outre du produit obtenu avec au moins un composé fonctionnel à insaturation carbone-carbone.

2. Composition selon la revendication 1 comprenant
A) 15 à 75 % en poids d'au moins une résine polyester insaturée contenant une polyoléfine,
B) 0,1 à 50 % en poids d'au moins une résine polyester insaturée différente de A),
C) 10 à 65 % d'au moins un diluant réactif,
D) 0,1 à 15 % en poids d'additifs, et
E) 0,1 à 10 % en poids d'au moins un initiateur de radical libre,
le % en poids étant basé sur le poids total de la composition.

3. Composition selon les revendications 1 et 2 comprenant de 0 à 50 % en poids d'au moins une substance F) réactive capable de se lier chimiquement aux composants organiques A), B) et/ou C) pour former des structures inorganiques/organiques, le % en poids étant basé sur le poids total de la composition.

4. Composition selon les revendications 1 et 2 comprenant 0 à 50 % d'au moins une substance F) polymère inorganique portant des groupes réactifs qui sont capables de se lier chimiquement aux composants organiques A) à C), le % en poids étant basé sur le poids total de la composition.

5. Composition selon les revendications 1 à 4 dans laquelle la au moins une polyoléfine fonctionnelle est un polyisoprène à fonctionnalité hydroxyle et/ou un polybutadiène à fonctionnalité hydroxyle.

6. Procédé de fixation d'articles enroulé comprenant les étapes
a) d'application de la composition selon les revendications 1 à 5 sur des articles enroulés par imprégnation, et
b) de durcissement de la composition appliquée.

7. Article enrouléfixé avec la composition selon les revendications 1 à 5.
